# EUROPEAN PATENT SPECIFICATION

(11) **EP 2 095 185 B1**
(45) Date of publication and mention of the grant of the patent: **04.09.2019**
(21) Application number: 07848411.0
(22) Date of filing: 28.11.2007
(51) Int. Cl.: G03B 21/585, G03B 21/62

(54) **THREE-DIMENSIONAL DISPLAY**
DREIDIMENSIONALE ANZEIGE
AFFICHAGE TRIDIMENSIONNEL

(30) Priority: 28.11.2006 GB 0623730
(43) Date of publication of application: 02.09.2009
(73) Proprietor: Pufferfish Limited, Edinburgh EH19 1UU (GB)
(72) Inventor: CAVENDISH, William George Grey, Edinburgh EH1 1BS (GB); COLLIER, Oliver Roland, Surrey TW10 6TN (GB)
(74) Representative: Hutchison, Craig McGregor
(86) International application number: PCT/GB2007/004564
(87) International publication number: WO 2008/065400

(56) References cited:
- CA-A1- 2 505 327
- US-A- 4 103 369
- US-A- 4 597 633
- US-A- 4 974 829
- US-A- 5 335 436
- US-A- 5 820 242
- US-A- 6 148 551

## Description

### Field of the invention

The invention relates to a three-dimensional display for the display of images over the interior and/or exterior surface of a three-dimensional form.

### Background to the invention

Three-dimensional displays, which display moving or static images over the surface of a three-dimensional geometric form, have an inherent advantage over flat, planar displays in that they may be viewed from more than one vantage point at any one time, allowing a dispersed audience to view images without the requirement for the display to have a predetermined orientation relative to said audience. Three-dimensional displays are typically spherical or spheroidal in form, but other three-dimensional geometric forms (e.g. cylindrical) are also known.

Existing systems for the display of moving images over a three-dimensional geometric form are limited in their ability to display images over the entirety of the display surface. U.S Patent No. 2,592,444, issued on April 8, 1952 to Matelena, describes an apparatus employing a projector having two opposed lenses mounted inside a translucent sphere for projecting images onto opposing sides of the sphere, such that they may be viewed externally to the sphere. U.S. Patent No. 3,586,432 issued on June 22, 1971 to Pentes Design Incorporated, describes a system employing three projectors mounted inside a translucent sphere, projecting separate images viewed on the external surface of the sphere. U.S. Patent No. 6,739,725 issued May 25, 2004 to Ronen describes a system employing a single projector mounted inside a revolving translucent sphere. Each of these systems provide only very limited coverage of the spherical screen in its entirety whilst equally having the added difficulty of limited access to the projectors mounted within the spheres.

U.S. Patent No. 4,597,633, issued on July 1, 1986 to Fussell, describes a system employing a series of projectors mounted within a base unit that projects light vertically towards a series of lens assemblies, mounted on a central column, which redirect the projected light perpendicularly to the translucent spheroidal reception surface. This publication states that there is a full 360° of viewing area on the external surface. However the images can be viewed on the horizontal plane only, and consist of separate non-continuous images. The system is described as being portable in that the flexible translucent screen and internal support column may be stored within the base unit for purposes of transportation and may be erected at a selected side by raising the internal column and engaging it in the top arcuate panel. However, this requires complex assembly and alignment. Furthermore, the system allows for only limited image coverage over the screen in its entirety, whilst providing limited access to the internal projector and lens assemblies, which require careful alignment once erected. Heated air is required for inflation of the non-airtight image reception surface or projection screen. This is a serious limitation as digital image projectors will only function between pre-described temperature ranges with higher temperatures limiting their performance dramatically.

U.S. Patent No. 4,859,053, issued on August 22, 1989 to Nicolas, describes a system whereby a projector is positioned outside a sphere, which projects through an aperture in the side of the sphere onto the inner side of a translucent hemisphere opposite the projector. This system allows for easy access to the projector but only produces an image on a hemispherical screen. European Patent No. 0999469, granted with effect from June 16, 2004 to Joseph, describes a similar system comprising a rising or suspended balloon and at least one convex mirror carried by the balloon and interposed between the projector mounted on the outside of the balloon, and the screen such that images are projected onto the internal surface of the translucent balloon through a transparent window in the wall of the balloon. The system requires careful alignment of the projector, mirror and screen and as such requires specialist skills during erection and when struck. In another embodiment, two projectors are directed through a transparent window in the wall of the translucent balloon and onto an internal convex mirror mounted opposite. Light is reflected from the convex mirror over the internal surface of the translucent balloon making images visible over the external surface of the balloon except for where there is a shadow created by the convex mirror positioned opposite the transparent window. A system with a similar design is described alongside a series of alternate embodiments in International Patent Application Publication No. WO 02/065207, published on August 22, 2002 in the name of Ligon. As with the aforementioned invention an image shadow is present where the mirror is positioned between the projector and inner surface of the translucent sphere. Also, both systems require multiple components for projection of images over the inner surfaces of their respective screens, increasing the likelihood of damage or misalignment of individual components during transportation or erection, thus detracting from the quality of the image viewed on the external surfaces of said screens. It would be desirable to provide a simplified image projection system. It would also be desirable to provide a system whereby all components are protected within a single housing unit during transportation, erection and use.

U.S. Patent No. 6,698,900, issued on March 2, 2004 to Audio Video Imagineering, Inc. describes a system whereby a projection head is mounted on the interior surface of a translucent hollow three-dimensional geometric space, for example a sphere, which is then attached to an electronic control unit (ECU) via an umbilical cord. The use of a single wide-angle projection lens allows for images to be projected onto the majority of the internal surface of the translucent screen, so that images are visible over the majority of the external surface. The primary function of the disclosed system is the display of laser-projected images generated by the ECU and the apparatus requires specialist skills for erection. The ECU remains separate from the screen itself, rather than operating as a single unit, increasing the overall system footprint and in turn cost per square meter of display surface.

US 4,103,369 discloses a display apparatus for displaying images on a three-dimensional surface, comprising a flexible inflatable projection screen having an inner surface which substantially encloses a three-dimensional space and comprises an aperture, and a base unit having a projection screen receiving aperture to which the aperture of the inflatable projection screen is joined using a gas-tight seal such that gas can be supplied from the base unit through the apertures. The base unit comprises inflation apparatus for supplying gas through the joined apertures to inflate the inflatable projection screen. The display apparatus comprises image projection apparatus which is operable to project images onto the inner surface of the inflatable projection screen in use, when the inflatable projection screen is inflated. The base unit is configured to receive and contain the inflatable projection screen when the inflatable projection screen is deflated.

US 6,148,551 discloses a system for displaying a message, which includes a base portion, an inflatable balloon mounted to a supporting base member configured to engage the constricted portion of the balloon, a blower positioned within the base portion for blowing air through the base member and into the lower opening of the balloon and inflating the balloon to a point above the base member, and a light mounted on the base portion, and within the base member within the opening in the lower end of the balloon for providing light into the interior of the inflated balloon and the light, in turn, lighting the exterior of the balloon. The system includes a zippered portion of the balloon body, so that when the blower is turned off, the balloon is deflated, and the balloon is able to be stored within an area between walls of the base portion and the light, so that a cap member may be placed over the light and the entire system may be transported in the deflated state.

CA 2,505,327 discloses a mobile lighting apparatus including an envelope or balloon, which contains a frame supporting an illuminating device (typically an electric light bulb) inside the envelope. The envelope is mounted on a telescopic mast supported by a movable base element incorporating stabilising legs. The envelope may be inflatable or rigid. For an inflatable envelope, the apparatus includes various sensors for sensing deformation and/or pressure in the envelope and a means to supply air or other gas to inflate the envelope.

The invention aims to mitigate one or more of the abovementioned disadvantages of known three-dimensional display screens.

Embodiments of the invention aim to project static or moving images over the majority of the internal surface of a hollow three-dimensional geometric form to be viewed on the external surface without gaps between images, or shadows created by internal structure.

Some embodiments of the invention aim to provide a display which can be positioned in any orientation whether vertically on a floor, affixed to a wall or suspended from a ceiling or alternate structure.

Some embodiments of the invention provide a display with a small footprint relative to the size of the display, in that all the system components required for its operation are contained within the system.

Some embodiments of the invention are water tight and physically durable, enabling such systems to be used indoors and outdoors in all adverse weather conditions.

Some embodiments of the invention aim to provide a system with easy access to the system components and which is self-contained in that all the elements that make-up the display may be stored within a base unit for the purposes of storage and transportation.

Some embodiments of the invention are in the form of a modular system, allowing additional hardware components to be added without significantly increasing the overall system footprint.

Some embodiments of the invention provide a system in which ambient or cooled air is brought into contact with the projection systems, instead of heated air, to enable the use of heat sensitive projection systems.

### Summary of the invention

According to a first aspect of the present invention there is provided display apparatus for displaying images on a three-dimensional surface, according to claim 1.

Preferably, the base unit is configured to receive and contain the inflatable projection screen when the inflatable projection screen is deflated whilst the aperture of the inflatable projection screen remains joined to the aperture of the base unit.

Thus, the display apparatus can be deployed, used, stowed away and transported without requiring the inflatable projection screen to be attached to and removed from the base unit.

By "inflatable" we mean that the projection screen can be inflated by filling it with pressurised or hot air. The projection screen may be elastic or inelastic, although typically it will be relatively inelastic. The projection screen is typically gas-tight, although a projection screen could be employed which is not entirely gas-tight but allows the slow egress of gas through the projection screen, provided that the projection screen retains gas sufficiently to be inflatable. Where the projection screen is not entirely gas-tight, gas will typically be supplied into the three-dimensional space defined by the inflatable projection screen continuously.

By the term "base unit" we include units suitable for supporting the inflatable projection screen when it is inflated, irrespective of whether the base unit is located underneath the inflatable projection screen in use, some or all of the time.

The images may be static. Typically, the images will be moving images (i.e. video) and the projection apparatus will be moving images projection apparatus.

Suitableflexible rear projection screen materials are known to those skilled in the art.

The image projection apparatus is configured to project images directly onto the inner surface of the inflatable projection screen in use, when the projection screen is inflated. This configuration can help maximise the surface area over which images are displayed and avoids shadows.

The inflatable projection screen may comprise two layers. The inner layer may be transparent. The outer layer may be translucent (for the display of images to be viewed from the outside of the display). It may be that the inner layer is translucent and the outer layer is transparent or translucent (for the display of images to be viewed from the outside of the display).

Where the inflatable projection screen comprises two layers, the base unit may be adapted to maintain a higher internal pressure within the innermost layer than between the layers. This can improve the stability of the inflatable projection screen, e.g. in high winds, as the outer layer (or layers) shelters the innermost layer. The inner and outer layers each require apertures through which gas can be introduced. The inner layer would be joined in a gas-tight fashion to the aperture of the base unit and the aperture of the outer layer will be joined in a gas-tight fashion to a separate aperture of the base unit.

In use, the lens may be located within the base unit, outside the aperture of the inflatable projection screen (i.e. on the base unit side of the joint between the apertures of the base unit and the inflatable projection screen) but which projects images through the aperture of the inflatable projection screen, directly onto the inner surface of the inflatable projection screen.

The image projection apparatus may comprise an image projecting portion (e.g. the lens) which has a first, deployed, configuration when in use for projecting images, and a second, retracted, configuration for storing the inflatable projection screen.

Preferably, the base unit comprises a projection screen receiving volume bounded in part by a diaphragm (which is typically roughly orthogonal to an axis extending from the centre of the base unit to the centre of the inflated projection screen) comprising an aperture through which the image projecting portion of the image projection apparatus extends in the deployed configuration, but not in the retracted configuration.

Thus, the projection screen receiving volume may receive the projection screen for storage purposes without the image projecting portion extending therein. It is easier to store the projection screen in a volume which does not have the image projecting portion extending therein. Preferably, the projection screen can be stored in the projection screen receiving volume without the projection screen resting on the image projecting portion. This can avoid damage to the projection screen and/or image projecting portion. This is particularly important if the image projecting portion is hot after use, in which case it might damage the projection screen.

The image projecting portion may extend through the aperture of the diaphragm in the deployed configuration, but not in the retracted configuration, because the image projecting portion is moveable relative to the base unit (typically parallel to an axis extending from the centre of the base unit to the centre of the inflated projection screen).

The image projecting portion may extend through the aperture of the diaphragm in the deployed configuration, but not in the retracted configuration, because the diaphragm is moveable relative to the base unit (typically parallel to an axis extending from the centre of the base unit to the centre of the inflated projection screen). The diaphragm may be removable from the base unit. The diaphragm may be moveable from a first configuration in which the image projecting portion extends through the aperture in the diaphragm to a second configuration in which the image projecting portion does not extend through the aperture. In the second configuration, the diaphragm, or surrounding walls which are attached to the diaphragm, may extend out of the body of the base unit.

A gas-tight seal (e.g. a gas-tight flexible membrane) may be provided between the image projecting portion, or a part which is attached to the image projecting portion and which supports and moves with the image projecting portion, and the aperture of the diaphragm. Where no gas-tight seal is provided, the interior of the base unit and the three-dimensional space enclosed by the inflatable projection screen are typically in gaseous communication and are both pressurised in use, when the projection screen is inflated. Where a gas-tight seal is provided between the aperture of the diaphragm and the image projecting portion, or a part which is attached to the image projecting portion and which supports and moves with the image projecting portion, the diaphragm and gas-tight seal typically divide the base unit such that the portion of the base unit which is not in gaseous communication with the three-dimensional space enclosed by the inflatable projection screen need not be pressurised when the projection screen is inflated.

Typically, the aperture of the base unit and the aperture of the inflatable projection screen are sealedly joined to each other around the perimeter of each, although each may be joined to a gas-tight connecting portion, such as a tube. Typically, it will be possible to detach the aperture of the inflatable projection screen from the aperture of the base unit in order to replace the inflatable projection screen.

The inflatable projection screen may be stored within the base unit without detaching the aperture of the inflatable projection screen from the aperture of the base unit, by passing the inflatable protection screen through the aperture of the base unit, into the interior of the base unit.

The base unit may comprise a recess (for example a recess which is bounded by at least one recess wall and a base, such as the diaphragm, or a recess which constitutes an opening into the interior of the base unit), and the aperture of the base unit may be located within the recess and narrower in at least one dimension than the recess. In this configuration, the inflatable projection screen may be stored around the aperture of the base unit, by introducing the inflatable projection screen into the recess, around the aperture of the base unit. In this configuration, the aperture of the base unit will typically be located on the end of a stem which extends into the recess and through which the image projection apparatus extends in use.

The aperture of the inflatable projection screen and the aperture of the base unit may be of approximately the same size and shape as the cross-section of the base unit.

The aperture of the inflatable projection screen and the aperture of the base unit may be narrower than the base unit in at least one, and preferably two dimensions. The aperture of the inflatable projection screen and the aperture of the base unit may be of less than half the width of base unit in at least one, and preferably two dimensions. The aperture of the inflatable projection screen and the aperture of the base unit may be of less than a quarter of the width of the base unit in at least one, and preferably two dimensions. The base unit and the inflatable projection screen may be configured such that, when it is inflated, the inflatable projection screen rests on a formation (e.g. a rim) of the base unit, located away from (e.g. around) the apertures of the inflatable projection screen. This can provide increased mechanical stability of the inflated projection screen in comparison with an inflated projection screen which is instead supported only at the aperture of the inflated projection screen. The formation (eg. rim) of the base unit may be shaped to correspond to the shape of the inflated projection screen where it will contact the formation.

The display apparatus may be suitable for use in a variety of orientations. Typically, the display apparatus is configured so that it may be used with the base unit resting on a horizontal surface with the inflated projection screen extending above the base unit. The display apparatus may be configured so it may be used with the base unit supported by a horizontal surface, or a mounting, with the inflated projection screen extending below the base unit. The display apparatus may be configured so it may be used with the base unit attached to a support (e.g. a vertical wall, scaffolding etc.) with the inflated projection screen extending horizontally from the base unit. The base unit may comprise one or more attachment formations (such as bolt or screw receiving holes) for attaching the base unit to a surface or other support.

Preferably, the gas is air in which case the aperture of the base unit and the aperture of the inflatable protection screen are sealed in an air-tight fashion. More preferably, the gas is ambient air which has not been heated. The gas may be cooled by the base unit. Typically, an inflation device within the base unit draws in air external to the display and introduces it through the apertures into the three-dimensional space enclosed by the inflatable projection screen, when the device is to be inflated. Typically, air will be introduced into a volume comprising system components within the base unit, such as at least part of the image projection system. The inflation device may be operable to produce varying rates of gas flow (typically air flow) or to maintain a gas pressure selected from a range of pressures within the three-dimensional space enclosed by the inflatable projection screen. Air may leak gradually from the base unit and/or the inflatable projection screen in which case the equilibrium pressure within the three-dimensional space enclosed by the inflatable projection screen will depend on the rate of introduction of air by the inflation device. Greater internal pressure will lead to greater surface tension in the skin and allow the inflatable projection screen to retain a predefined shape when the display is hung or mounted at an angle other than a vertical position above or below the base unit, or in adverse weather conditions such as wind. Thus, a higher internal pressure may be used in adverse weather conditions or when the inflatable projection screen is hung or mounted at an angle other than vertically above or below the base unit. The base unit may comprise a plurality of inflation devices. The base unit may additionally or instead comprise an aperture for receiving air from an external inflation device. Moisture control means (such as a dehumidifier or moisture filter) may be provided to control moisture within the base unit and/or the three-dimensional space enclosed by the inflatable projection screen. A temperature regulator (e.g. a heater and/or a refrigeration unit) may regulate the temperature of air within the base unit and/or the three-dimensional space enclosed by the inflatable projection screen. Sound control apparatus, such as sound insulation, may be provided to control the sound level generated by one or more system components, e.g. the inflation device.

The inflatable projection screen may comprise one or more ties, or one or more attachment formations to which ties may be attached, in order to support the inflatable projection screen.

The base unit may be generally cylindrical. Thus, the inflatable projection screen may be stored within the base unit and the base unit may be rolled, facilitating transport of the display device. The base unit may comprise an outwardly extending circumferential ridge at either end to facilitate rolling. The base unit may comprise a lower surface having one or more wheels or coasters thereon.

The display device may be generally circularly symmetric when the inflatable screen is inflated. A generally cylindrical base unit may be coaxial with the aperture of the base unit, the aperture of the inflatable screen and the central axis of the inflated screen. The inflated screen may be generally spherical. The inflated screen may be spheroidal.

The display device may further comprise a lid which can be fitted over an end of the base unit to retain the inflatable projection screen within the base unit. The lid, or base unit, may be provided with one or more fasteners for securely fastening the lid to the base unit, with the deflated projection screen retained within the base unit.

The lens of the image projection apparatus may be removable and the image projecting portion may have a mounting for detachably receiving the lens. The lens may therefore be removed for storage. The base unit may comprise an openable access hatch for inserting and removing the lens when the image projecting portion is in the second, retracted, configuration. The access hatch is preferably gas-tight when it is shut.

Preferably, the display apparatus is waterproof when the inflatable projection screen is inflated.

The image projection apparatus typically includes a computer and data storage (which are typically fixed), and one or more lenses mounted on an image projecting portion (which are typically moveable between the first and second positions). The projector may be included in the image projecting portion and be moveable with the lens. The projector may be fixed and may direct images to the lens which is moveable between the first and second positions, in which case the image projecting portion may be a telescopic member through which light can be projected. The image projection apparatus includes a single projected light source (e.g. a single lens). This reduces or removes the requirement for complex orientation of multiple projected light sources. Typically, the lens is a wide angle fisheye lens capable of outputting light across an azimuthal range of 180°, or more than 180°.

Preferably, the inflatable projection screen and the image projection apparatus, together with the mechanical, electrical and computational components required for the operation of the display apparatus and for the purpose of storage and transportation, are stored together in the base unit when the projection screen is not inflated. Preferably, all system components required for the operation of the display are contained and mounted within the base unit, for example computational, electrical, mechanical, aural and optical components and optionally control mechanisms, data collection devices, wireless data and control devices, speaker
systems, environment sensors and sensors allowing for human interaction with the display device either by physical means (e.g.. touch) or by remote means (through the use of mobile communications devices). Additionally connection sockets may be built into the wall of the base unit allowing for external control, computational and data systems to be integrated with the overall system but external to the display itself. In another embodiment additional system components may be detachably integrated with the display via a modular system connected via attachment means to the base unit. Thus, the base unit may comprise environment sensors and/or sensors allowing for human interaction with the display device either by physical means (e.g.. touch) or by remote means (through the use of mobile communications devices), and the image projection apparatus may project images responsive to input receive via the said sensors.

A display system in accordance with this invention is of particular use when such a system is only required for use over a short time span, for example, at events such as, music festivals, sporting events, tradeshows, targeted marketing and 'gorilla' or impromptu advertising campaigns.

Typically, the aperture of the base unit comprises a flange and the aperture of the inflatable projection screen is sealed to the aperture of the base unit in a gas-tight fashion using sealant, or a sealing ring. Thus, an air and watertight system can be provided.

The base unit is typically made of metal (e.g. aluminium), a plastics material, fibre glass, carbon fibre or any such material which is sufficiently robust to knocks or damage sustained during transportation or during installation, and which is preferably light enough for ease of handling. The image projection apparatus is preferably mounted within and protected by the base unit.

### Description of the Drawings

The invention will now be described by way of example and with reference to the accompanying drawings in which:
Figure 1(a) is a sectional elevation of a system in accordance with the invention employing a fisheye lens mounted on a single projector for producing images over the majority of the surface of a three-dimensional screen attached to a base unit housing the system components;
Figure 1 (b) is a perspective view of an access hatch on the side of the base unit;
Figure 1(c) is a detail sectional elevation showing the attachment of the inflatable projection screen to the base unit;
Figure 2(a) is a sectional elevation of a system in accordance with the invention demonstrating the storage of the inflatable projection screen when not in use;
Figure 2(b) is a sectional elevation of the aforementioned system when stored, showing the attachment of an additional system module;
Figures 3(a) and (b) are simplified sectional elevations of an embodiment of the invention demonstrating a diaphragm between the projection system and the three-dimensional space defined by inner surface of the inflatable projection screen;
Figures 4(a) and (b) are simplified sectional elevations of an alternative embodiment of the invention demonstrating a diaphragm between the projection system and the three-dimensional space defined by inner surface of the inflatable projection screen
Figures 5(a) and (b) is a simplified sectional elevation of an alternative embodiment of the invention demonstrating a diaphragm and airtight collar between the projection system and the three-dimensional space defined by inner surface of the inflatable projection screen;
Figures 6(a), (b) and (c) are diagrammatical sectional elevations showing means of restricting deformation of the inflated projection screen in differing orientations under varying environmental conditions; and
Figures 7(a) and (b) are simplified sectional elevations of an alternative embodiment of the invention demonstrating a diaphragm between the projection system and the space defined by a twin-layered inflatable projection screen in accordance with the invention.

### Detailed Description of an Example Embodiment

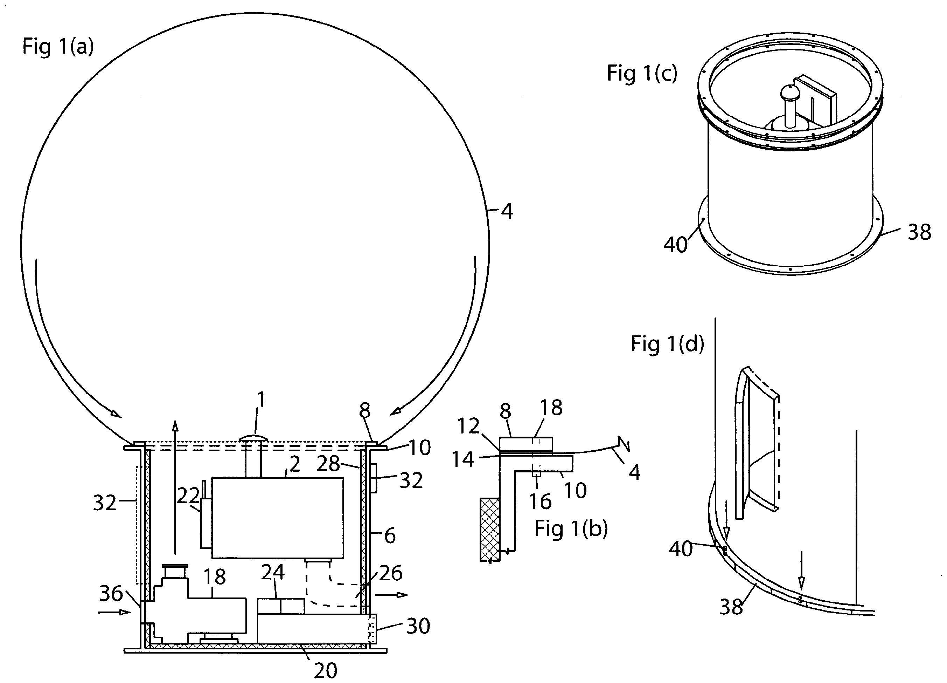

Figure 1(a) is a sectional elevation of a system in accordance with the invention employing a fisheye lens 1 mounted on a single image projector 2 for projecting images onto the majority of the inner surface of a flexible hollow translucent inflatable projection screen 4 which, when inflated, form a three-dimensional screen. In this example, the inflatable projection screen is made from rear projection PVC screen material. The inflatable projection screen is translucent so that images projected onto the inner surface of the inflatable projection screen are visible on the external surface.

The inflatable projection screen is attached to a base unit 6 within which the system components are mounted. The inflatable projection screen includes an aperture, the perimeter of which is securely attached to the circumference of an open aperture in the base unit, and which is held between a ring 8 and flange 10 as shown in the detail described by Figure 1(b). In Figure 1(b), two rubber rings 12 and 14 are attached to the ring 8 and flange 10, which act to grip the inflatable projection screen and prevent lateral movement. The ring 8 is fastened to the flange by means such as a number of bolts (or appropriate clip assembly) 16 inserted through the underside of the flange 10 and into threaded recesses 18 in the ring 8.

Additional components mounted within the base unit as shown in Figure 1(a), include an inflation device 18 (e.g. a centrifugal blower), a computer 20 or digital storage and playback device such as a DVD player or Direct-Play Hard Drive, a wireless data control 22 linked to the projector 2. Sensors, data collection and wireless control devices 24 external to the computer 20 are also mounted within the base unit. The internal surface of the base unit is lined with sound deadening foam 28 such as that supplied by Sound Dead Steel, Renown Engineering Ltd, Cramlington, UK. Ducting 26 is attached to the projector 2 and the external surface of the base unit. Sockets 30 allowing for external devices and power supplies to be connected to the computer 20 and other internal components are situated on the exterior of the base unit, as are control switches 32 for the system's operation. Built into the wall of the base unit is a hatch 34 allowing for access to the internal components.

During operation a user connects a power supply to sockets 30. The inflation device 18, computer 20, projector 2 and other internal components are turned on at the control switches 32. The inflation device 18 draws cool air external to the base unit through a filter 36 and directs it into the enclosed space as defined by the interior of the base unit and the inflatable projection screen. As air is drawn in, a pressure differential is created between said enclosed space and that external to it. This pressure differential acts to inflate the inflatable projection screen to such a point that sufficient tension across the surface of the inflatable projection screen acts to structurally support the inflated projection screen in a natural state, defined by the shape of the inflatable projection screen. Images are transferred from the computational device 20 to the projector 2 which projects the images as light through the fisheye lens assembly 1 situated at a horizontal plane relative to the point at which the inflatable projection screen is attached to the base unit. Light is projected 180 ° in both the horizontal and vertical axes from the lens 1 onto the inner surface of the inflatable projection screen. Images may be viewed on the external surface of the inflatable projection screen. Heat generated by the projector 2 lamps is transferred via the airtight enclosed space as defined by the internal surface of the ducting 26 from the projector 2 to the space external to the base unit. System components 24 may monitor environmental conditions such as temperature, pressure and humidity, internal to the enclosed space as defined by the base unit and attached inflatable projection screen. By example, similar components may collect and transfer data to the computational device 20 from external sources such as mobile communication devices. The projector 2 may be control via a wireless hub 22 or via a wired connection to socket 30.

In another embodiment, the lens 1 may project light 220 ° in both the horizontal and vertical axes, at which time the lens would be situated at an alternative predefined position and orientation further inside the space defined by the internal surface of the inflatable projection screen, not shown. In another embodiment, an amplifier may be mounted within the base unit and an appropriate speaker system built into the walls of the base unit such that directional sound emanates from the display system (not shown).

Figure 1 (c) is a perspective view of one embodiment of the base unit as an open cylindrical container without a inflatable projection screen attached. The open end functions as a recess into which the inflatable projection screen can be introduced when it is not inflated. An additional lower flange 38 is shown to protrude from the base of the base unit. A number of holes 40 are shown around this lower flange 38 to allow for the base unit to be securely fastened to a floor, wall or ceiling, depending on the desired orientation of the display system. Bolts or similar fastening devices may pass through these holes 40 and into said surface for attachment purposes. Figure 1(d) shows a section of a perspective view of the hatch 34 situated in the side of the base unit, providing easy access to the system components mounted within.

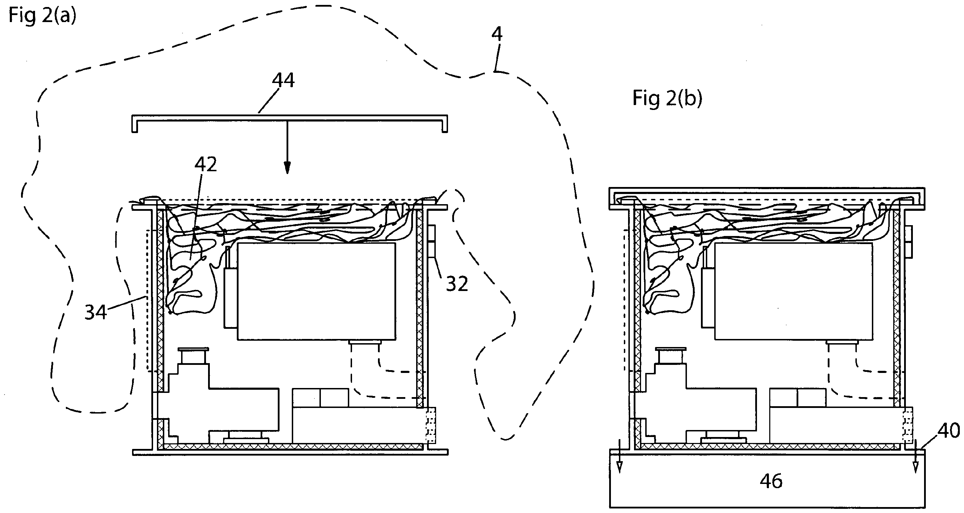

Figure 2(a) is a sectional elevation of a system in accordance with the invention demonstrating the storage of the projection screen when not in use. In this example the user may turn off the system components at the control switch 32 and remove the fisheye lens 1 from the projector 2 body via the hatch 34 situated to one side of the base unit. The inflatable projection screen may then be deflated and be stored within the cavity 42 as defined by the space enclosed by the base unit and between the system components mounted within. As illustrated in Figure 1(b) the flange 10 extends further than the ring 8 allowing for the inflatable projection screen to fold over the ring 8 and provide a surface on the flange 10 for a lid 44 to be attached via means such as a bolt (or appropriate clip assembly) inserted through the underside of the flange 10 and into a threaded recess within a lip of the lid 44, not shown. The system components are thus safely and securely stored within a container as defined by the based unit and the affixed lid 44 for purposes of storage and transportation.

In one embodiment as shown by example in Figure 1(c), where the base unit is cylindrical in shape and where both the flange 10 and lower flange 38 extend outward from the body of the base unit, the base unit may be tilted onto its side and rolled for ease of transportation. Figure 2(b) illustrates said container and an additional modular housing unit 46 attached to and securely fastened to the base of the base unit by means such as a bolt (or appropriate clip assembly) inserted through holes 40 in the topside of the lower flange modular housing unit 46. The modular housing unit may contain mechanical, electrical, optical or computational devices in addition to those contained within the base unit or may provide means of supplying ballast to the display system. An example of which would be a water tank to be filled via a water inlet valve in situ, and emptied via a water outlet valve, not shown. In each case, the modular housing unit 46 remains within the outer circumference of the base unit through the vertical axes, which is desirable, as the horizontal footprint of the display device remains the same.

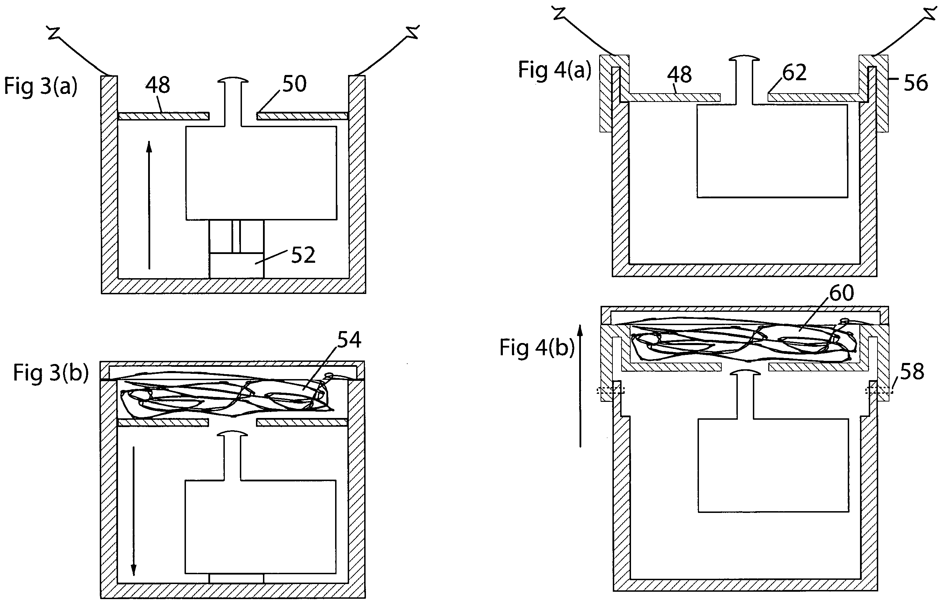

Figures 3(a) and (b) are simplified sectional elevations of an embodiment of the invention demonstrating a diaphragm 48 positioned toward the top of the base unit such that the projection lens 1 protrudes through an aperture 50 in the diaphragm 48 and into the enclosed space as defined by the inflatable projection screen. When the display system is not in use or during transportation the projector 2 and attached lens 1 may move down through the vertical axis of the display via a mechanical or automated jack 52 and rest below the aperture 50 in the diaphragm 48. The lens 1 is then removed from the storage space 54 as defined by the diaphragm 48 and upper part of the base unit, allowing for the inflatable projection screen to be safely stored without coming into contact with any of the system components mounted within the main body of the base unit, or the inflatable projection screen coming into contact with the surface of the lens 1.

Figures 4(a) and (b) are simplified sectional elevations of another embodiment of the invention whereby the upper part of the base unit and diaphragm 48 may be joined forming a gasket 56 with an aperture 62 through which the lens 1 protrudes. The diaphragm 48 and gasket 56 assembly may be independently moved by the user up and down through the vertical axis' of the body of the base unit such that the combined diaphragm 48 and gasket 56 may be raised above the lens 1 when not in use, and the gasket 56 fastened by means (e.g. a bolt received by a threaded socket within the wall of the base unit) 58 in a vertical position so as to create storage space 60 for the safe containment of the inflatable projection screen which is thus removed from coming into contact with both the lens 1 and other system components.

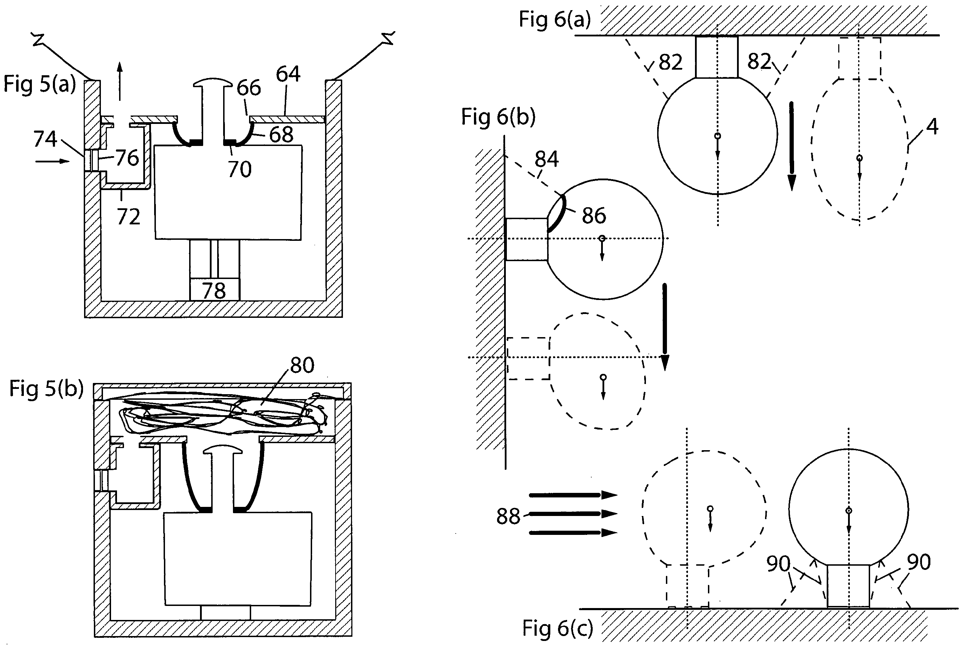

Figures 5(a) and (b) are simplified sectional elevations of a further alternative embodiment of the invention whereby a diaphragm 64 is mounted toward the top of the base unit, with an aperture 66 through which the lens 1 protrudes. A flexible airtight membrane 68 is attached to the underside of the diaphragm 64 and sealed around the lens 1 mounting to the projector via an airtight collar 70.

In use, an inflation device 72 draws cool air directly from the environment external to the base unit and directs it into the enclosed space as defined by the inflatable projection screen and upper surface of said diaphragm 66 and flexible airtight membrane 68. As air is drawn through a filter 76 and a one-way airtight valve 76 a pressure differential is created between said enclosed space and that external to it. This pressure differential acts to inflate the inflatable projection screen to such a point that sufficient tension across the surface of the inflatable projection screen acts to structurally support the inflatable projection screen in a natural state defined by the shape of the inflatable projection screen. Once the inflatable projection screen is fully inflated the inflation device 72 may be switched off, as air will not pass back through the airtight one-way valve 76. This is advantageous as any moisture drawn into said enclosed space will not come into contact with the electrical, mechanical or computational devices mounted within the base unit. When not in use, the one-way valve 76 may be released so as to allow air back through the inflation device 72 and the inflatable projection screen may deflate.

As shown in Figure 5(b) when the display system is not in use or during transportation the projector 2 and attached lens 1 may move down through the vertical axis of the display via a mechanical or automated jack 78 and rest below the aperture 66 in the diaphragm 64. The flexible membrane 68 will also extend through the vertical plane and remain fixed to the projector via the airtight collar 70. The lens 1 is then removed from the storage space 80 as defined by the diaphragm 64 and upper part of the base unit allowing for the inflatable projection screen to be safely stored without coming into contact with any of the system components mounted within the main body of the base unit, or the inflatable projection screen coming into contact with the surface of the lens 1.

Figures 6(a), (b) and (c) are diagrammatical sectional elevations showing means of restricting deformation of the three-dimensional screen in differing orientations under varying environmental conditions. Figure 6(a) illustrates a scenario whereby the display system is attached via the base of the base unit to a ceiling or hung from a structure such as a crane. Figure 6(b) illustrates a scenario whereby the display system is attached via the base of the base unit to a wall or other vertical structure such that the 'normal' vertical axis of display is perpendicular to said wall or structure. Figure 6(c) illustrates a scenario whereby the base of the base unit is resting on the ground. Each illustration shows the centre of gravity of the inflated projection screen and the resultant deformation. This demonstrates the advantage of being able to significantly increase the air pressure within the airtight display, relative to the external environment. The inflatable projection screen then becomes more rigid in structure and less likely to deform when under the influence of external forces such as wind. In situations where a sufficient pressure differential cannot be achieved in order of the inflatable projection screen to retain its predefined shape additional support ties may be used.

Figure 6(a) illustrates how the inflatable projection screen may be tied 82 to the ceiling or structure from which it hangs in such a way that the majority of the outer surface of the screen is viewable without obstruction. Figure 6(b) demonstrates how the inflatable projection screen will deform when attached to a wall or similar structure, whereby the inflatable projection screen is effectively cantilevered from the base unit to which it is attached. Support ties 84 attached to the upper side of the inflatable projection screen may be used, again limiting any visual obstruction of the screens surface from underneath. In a similar fashion an internal rigid support structure 86 may be used.

Figure 6(c) illustrates possible deformation of the inflatable projection screen when placed on the ground under high wind conditions 88. Support ties 90 situated to the underside of the inflatable projection screen will again limit any obstruction to the viewing window.

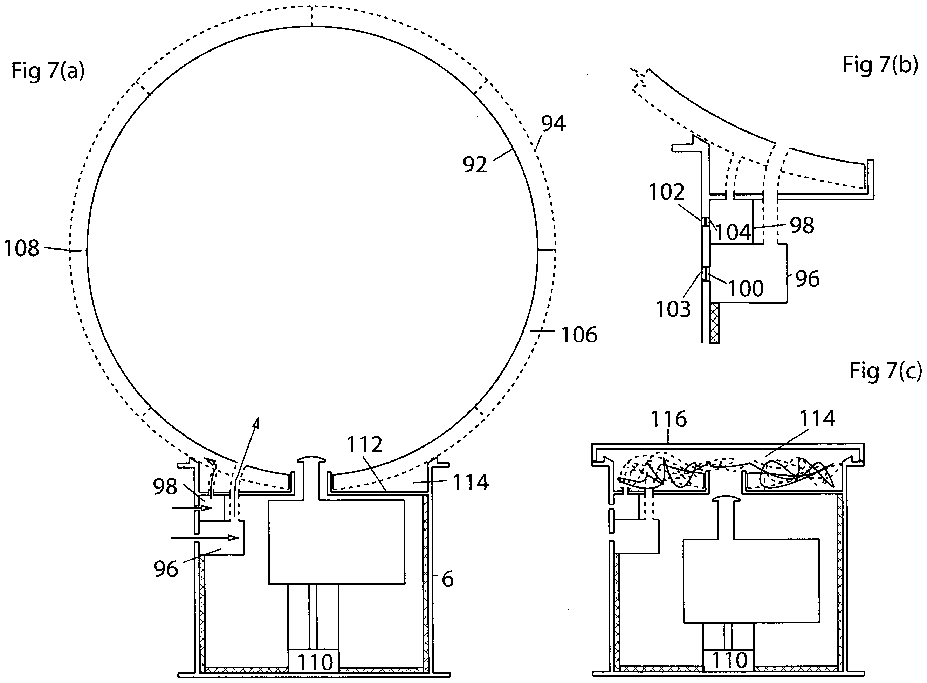

Figures 7(a) and (b) are simplified sectional elevations of an alternative embodiment of the invention whereby the inflatable projection screen defining an enclosed three-dimensional space within which the lens 1 protrudes at a predefined position and orientation, is made up of two layers which together define an airtight enclosed space therebetween. Figure 7(b) illustrates in detail the mechanism by which, during operation, an inflation device 96 draws air in from outside of the base unit, through a filter 103 and one-way airtight valve 100 and into the enclosed space defined by the inner layer 92 of the twin-layered skin. At the same time air is drawn in from the outside of the base unit by a second inflation device 98, through a filter 102 and a one way air-tight valve 104 and into the enclosed void 106 between the two layers of the skin, inflation device 96 inflates the three-dimensional space enclosed by the inner layer of the skin 92 to a greater pressure than the void 106 inflated by the second inflation device 98 so as to retain a three-dimensional shape. As illustrated in Figure 7(a) the two layers may have ties 108 between them so that they remain at a predisposed distance from each other. The inner layer 92 of the twin-layered skin may be made of a translucent material while the outer layer 94 may be made of a non-reflective, matt or polarising transparent material in order to limit reflected ambient light external to the display from distracting from the images projected onto the inner translucent layer 92 of the skin. It is intended that such an embodiment would provide greater stability of the viewing
surface in adverse weather conditions, for example high winds or where ambient light conditions would otherwise detract from the viewing experience.

As shown in Figure 7(a) the twin-layered skin may be attached by means (e.g. hook and loop fasteners) to upright members of a diaphragm 112 positioned toward the top of the base unit. When not in use, the two air-tight one-way valves 100 and 104 may be released, allowing air to escape back though the two inflation devices 96 and 98. The projector and attached lens 1 may move down through the vertical axis of the display via a mechanical or automated jack 110 and rest below the aperture in the diaphragm 112. The deflated twin-layered skin may then be stored within the void 114 defined by the top surface of the diaphragm 108 and the upper portion of the base unit and a lid fastened to enclose the void 114 by means previously demonstrated. The twin-layered skin is then safely stored for purposes of storage and transportation.

## Claims

1. Display apparatus for displaying images on a three-dimensional surface, comprising:
a flexible inflatable projection screen (4) having an inner surface which substantially encloses a three-dimensional space and
comprises an aperture;
a base unit (6) comprising inflation apparatus (18) for supplying gas to inflate the inflatable projection screen (4); and
an image projection apparatus (1, 2);
wherein the inflatable projection screen (4) is translucent and the image projection apparatus (1, 2) is configured to project images onto the inner surface of the inflatable projection screen (4) which are visible on and viewed from the outside of the display device (4);
wherein the base unit (6) has a projection screen receiving aperture to which the aperture of the inflatable projection screen (4) is joined using a gas-tight seal such that gas can be supplied from the base unit (6) through the aperture, and the base unit (6) is configured to receive and contain the inflatable projection screen (4) when the inflatable projection screen (4) is deflated;
**characterised in that**:
the image projection apparatus (1, 2) is operable to project images as single continuous images onto the majority of the inner surface of the inflatable projection screen (4) in use, when the inflatable projection screen (4) is inflated, and
wherein the image projection apparatus (1, 2) comprises a single projector (2) and a lens (1) from which an image is projected which, in use, extends through the aperture of the inflatable projection screen (4) or is located within the aperture of the inflatable projection screen (4) and the base unit (6) or is located within the base unit (6) outside of the aperture of the inflatable projection screen (4), said lens (1) being a wide angle lens which is configured to project images directly through the aperture of the inflatable projection screen (4) onto the inner surface of the inflatable projection screen (4).

2. Display apparatus according to claim 1, wherein the base unit (6) is configured to receive and contain the inflatable projection screen (4) when the inflatable projection screen (4) is deflated whilst the aperture of the inflatable projection screen (4) remains joined to the aperture of the base unit (6).

3. Display apparatus according to claim 2, wherein the base unit (6) is configured so that the inflatable projection screen (4) may be stored within the base unit (6) without detaching the aperture of the inflatable projection screen (4) from the aperture of the base unit (6), by passing the inflatable protection screen (4) through the aperture of the base unit (6), into the interior of the base unit (6).

4. Display apparatus according to claim 2, wherein the base unit (6) comprises a recess and the aperture of the base unit (6) is located within the recess and is narrower in at least one dimension than the recess, wherein the inflatable projection screen is stored around the aperture of the base unit, by introducing the inflatable projection screen (4) into the recess, around the aperture of the base unit (6).

5. Display apparatus according to any one preceding claim, wherein the inflatable projection screen (4) comprises two layers (92, 94).

6. Display apparatus according to any one preceding claim, wherein the image projection apparatus (1, 2) comprises an image projecting portion (1) which has a first, deployed, configuration when in use for projecting images, and a second, retracted, configuration for storing the inflatable projection screen (4).

7. Display apparatus according to claim 6, wherein the base unit (6) comprises a projection screen receiving volume bounded in part by a diaphragm (48, 64,112) comprising an aperture through which the image projecting portion of the image projection apparatus (1) extends in the deployed configuration, but not in the retracted configuration.

8. Display apparatus according to claim 7, wherein the image projecting portion (1) is moveable relative to the base unit (6) enabling the image projecting portion (1) to extend through the aperture of the diaphragm (48, 64, 112) in the deployed configuration, but not the retracted configuration.

9. Display apparatus according to claim 7 or claim 8, wherein the diaphragm (48, 64, 112) is moveable from a first configuration in which the image projecting portion (1) extends through the aperture in the diaphragm (48, 64, 112) to a second configuration in which the image projecting portion (1) does not extend through the aperture.

10. Display apparatus according to any one of claims 7 to 9, wherein a gas-tight seal (68) is provided between the image projecting portion (1), or a part which is attached to the image projecting portion (1) and which supports and moves with the image projecting portion (1), and the aperture of the diaphragm (64).

11. Display apparatus according to any one preceding claim, wherein the aperture of the inflatable projection screen and the aperture of the base unit (6) are of less than half the width of base unit (6) in at least one dimension, and the base unit (6) and the inflatable projection screen (4) are configured such that, when it is inflated, the inflatable projection screen (4) rests on a formation of the base unit (6), located away from the aperture of the inflatable projection screen (4).

12. Display apparatus according to any one preceding claim, wherein the base unit (6) is generally cylindrical, such that the display apparatus can be rolled whilst the base unit (6) contains the inflatable projection screen (4).

13. Display apparatus according to any one preceding claim, wherein the inflatable projection screen (4) and the image projection apparatus (1, 2), together with the mechanical, electrical and computational components required for the operation of the display apparatus and for the purpose of storage and transportation, are stored together in the base unit (6) when the projection screen (4) is not inflated.

## Patentansprüche

1. Anzeigevorrichtung zum Anzeigen von Bildern auf einer dreidimensionalen Oberfläche, umfassend:
einen flexiblen aufblasbaren Projektionsschirm (4) mit einer Innenfläche, die im Wesentlichen einen dreidimensionalen Raum einschließt und eine Öffnung aufweist;
einen Unterbau (6) mit einer Aufblasvorrichtung (18) zum Zuführen von Gas zum Aufblasen des aufblasbaren Projektionsschirms (4); und
eine Bildprojektionsvorrichtung (1, 2);
wobei der aufblasbare Projektionsschirm (4) lichtdurchlässig ist und die Bildprojektionsvorrichtung (1, 2) zum Projizieren von Bildern auf die Innenfläche des aufblasbaren Projektionsschirms (4) konfiguriert ist, die auf der Außenseite der Anzeigevorrichtung (4) sichtbar sind und von dort aus betrachtet werden; wobei der Unterbau (6) eine Projektionsschirmaufnahmeöffnung aufweist, mit der die Öffnung des aufblasbaren Projektionsschirms (4) mittels einer gasdichten Dichtung verbunden ist, sodass Gas vom Unterbau (6) durch die Öffnung zugeführt werden kann, und der Unterbau (6) zur Aufnahme des aufblasbaren Projektionsschirm (4) konfiguriert ist, wenn der aufblasbare Projektionsschirm (4) entleert ist;
**dadurch**
**gekennzeichnet, dass**:
die Bildprojektionsvorrichtung (1, 2) zur Projektion von Bildern als einzelne kontinuierliche Bilder auf den größten Teil der Innenfläche des verwendeten aufblasbaren Projektionsschirms (4), wenn der aufblasbare Projektionsschirm (4) aufgeblasen ist, verwendet werden kann, und
wobei die Bildprojektionsvorrichtung (1, 2) einen einzelnen Projektor (2) und ein Objektiv (1) aufweist, von dem ein Bild projiziert wird, das sich bei Verwendung durch die Öffnung des aufblasbaren Projektionsschirms (4) erstreckt oder sich innerhalb der Öffnung des aufblasbaren Projektionsschirms (4) und des Unterbaus (6) befindet oder sich innerhalb des Unterbaus (6) außerhalb der Öffnung des aufblasbaren Projektionsschirms (4) befindet, wobei das Objektiv (1) ein Weitwinkelobjektiv ist, welches zur Projektion von Bildern direkt durch die Öffnung des aufblasbaren Projektionsschirms (4) auf die innere Oberfläche des aufblasbaren Projektionsschirms (4) konfiguriert ist.

2. Anzeigevorrichtung nach Anspruch 1, wobei der Unterbau (6) zur Aufnahme des aufblasbaren Projektionsschirms (4) konfiguriert ist, wenn der aufblasbare Projektionsschirm (4) entleert ist, während die Öffnung des aufblasbaren Projektionsschirms (4) weiterhin mit der Öffnung des Unterbaus (6) verbunden ist.

3. Anzeigevorrichtung nach Anspruch 2, wobei der Unterbau (6) so konfiguriert ist, dass der aufblasbare Projektionsschirm (4) im Unterbau (6) aufbewahrt werden kann, ohne die Öffnung des aufblasbaren Projektionsschirms (4) von der Öffnung des Unterbaus (6) abzunehmen, indem der aufblasbare Projektionsschirm (4) durch die Öffnung des Unterbaus (6) in das Innere des Unterbaus (6) geführt wird.

4. Anzeigevorrichtung nach Anspruch 2, wobei der Unterbau (6) eine Aussparung aufweist und sich die Öffnung des Unterbaus (6) in der Aussparung befindet und in mindestens einer Ausdehnung schmaler als die Aussparung ist, wobei die aufblasbare Projektionsfläche um die Öffnung des Unterbaus herum gelagert ist, indem der aufblasbare Projektionsschirm (4) in die Aussparung um die Öffnung des Unterbaus (6) herum eingeführt wird.

5. Anzeigevorrichtung nach einem der vorhergehenden Ansprüche, bei der der aufblasbare Projektionsschirm (4) zwei Schichten (92, 94) aufweist.

6. Anzeigevorrichtung nach einem der vorhergehenden Ansprüche, wobei die Bildprojektionsvorrichtung (1, 2) einen Bildprojektionsteil (1) umfasst, der eine erste entfaltete Konfiguration, wenn er zum Projizieren von Bildern verwendet wird, und eine zweite eingezogene Konfiguration zum Aufbewahren des aufblasbaren Projektionsschirms (4) aufweist.

7. Anzeigevorrichtung nach Anspruch 6, bei der der Unterbau (6) ein Projektionsschirmaufnahmevolumen aufweist, das teilweise von einer Blende (48, 64, 112) begrenzt ist, die eine Öffnung, durch die sich der Bildprojektionsteil der Bildprojektionsvorrichtung (1) in der entfalteten Konfiguration, jedoch nicht in der eingezogenen Konfiguration, erstreckt, umfasst.

8. Anzeigevorrichtung nach Anspruch 7, bei der der Bildprojektionsteil (1) relativ zum Unterbau (6) bewegbar ist, sodass sich der Bildprojektionsteil (1) in der entfalteten Konfiguration, jedoch nicht der eingezogenen Konfiguration durch die Öffnung der Blende (48, 64, 112) erstrecken kann.

9. Anzeigevorrichtung nach Anspruch 7 oder 8, wobei die Blende (48, 64, 112) von einer ersten Konfiguration, in der sich der Bildprojektionsteil (1) durch die Öffnung in der Blende (48, 64, 112) erstreckt, zu einer zweiten Konfiguration, in der sich der Bildprojektionsteil (1) nicht durch die Öffnung erstreckt, bewegt werden kann.

10. Anzeigevorrichtung nach einem der Ansprüche 7 bis 9, wobei eine gasdichte Dichtung (68) zwischen dem Bildprojektionsteil (1) oder einem Teil, der an dem Bildprojektionsteil (1) angebracht ist und der den Bildprojektionsteil (1) stützt und sich mit selbigem bewegt, und der Öffnung der Blende (64) vorgesehen ist.

11. Anzeigevorrichtung nach einem der vorhergehenden Ansprüche, wobei die Öffnung des aufblasbaren Projektionsschirms und die Öffnung des Unterbaus (6) in mindestens einer Ausdehnung weniger als halb so breit wie der Unterbau (6) sind und der Unterbau (6) und der aufblasbare Projektionsschirm (4) so konfiguriert sind, dass der aufblasbare Projektionsschirm (4) im aufgeblasenen Zustand auf einer Ausbildung des Unterbaus (6) aufliegt, die von der Öffnung des aufblasbaren Projektionsschirms (4) entfernt ist.

12. Anzeigevorrichtung nach einem der vorhergehenden Ansprüche, wobei der Unterbau (6) im Allgemeinen zylindrisch ist, sodass die Anzeigevorrichtung gerollt werden kann, während der Unterbau (6) den aufblasbaren Projektionsschirm (4) enthält.

13. Anzeigevorrichtung nach einem der vorhergehenden Ansprüche, wobei der aufblasbare Projektionsschirm (4) und die Bildprojektionsvorrichtung (1, 2) zusammen mit den mechanischen, elektrischen und Computerbauteilen für den Betrieb der Anzeigevorrichtung und für die Aufbewahrung und den Transport zusammen im Unterbau (6) aufbewahrt werden, wenn die Projektionswand (4) nicht aufgeblasen ist.

## Revendications

1. Dispositif d'affichage pour l'affichage d'images sur surface tridimensionnelle, comprenant :
un écran de projection flexible gonflable (4) dont la surface interne englobe, en majeure partie, un espace tri-dimensionnel et comprend une ouverture ;
une unité de base (6) comprenant un dispositif de gonflage (18) assurant l'alimentation en gaz pour le gonflage de l'écran de projection gonflable (4) ; et
un dispositif de projection d'image (1, 2) ;
l'écran de projection gonflable (4) étant translucide et le dispositif de projection d'image (1, 2) étant conçu pour projeter sur la surface interne de l'écran de projection gonflable (4) des images visibles sur et visionnées depuis l'extérieur du dispositif d'affichage (4) ;
l'unité de base (6) étant dotée d'une ouverture destinée à accueillir l'écran de projection auquel l'ouverture de l'écran de projection gonflable (4) est raccordée par utilisation d'un raccord hermétique au gaz de telle sorte que le gaz puisse être alimenté par l'unité de base (6) via l'ouverture, et l'unité de base (6) étant conçue pour accueillir et ranger l'écran de projection gonflable (4) lorsque l'écran de projection gonflable est dégonflé (4) ;
caractéristique par le fait
que :
le dispositif de projection d'image (1, 2) est capable d'assurer la projection d'images comme images uniques continues sur la majorité de la surface interne de l'écran de projection gonflable (4) en cours d'utilisation, lorsque l'écran de projection gonflable (4) est gonflé, et
le dispositif de projection d'image (1, 2) comprenant un projecteur unique (2) et un objectif (1) à partir duquel une image est projetée qui, lors de l'utilisation, se déploie à travers l'ouverture de l'écran de projection gonflable (4), ou est intégré dans l'ouverture de l'écran de projection gonflable (4) et de l'unité de base (6), ou se situe dans l'unité de base (6) en dehors de l'ouverture de l'écran de projection gonflable (4), lequel objectif (1) est un objectif grand angle conçu pour projeter des images directement par l'ouverture de l'écran de projection gonflable (4) sur la surface interne de l'écran de projection gonflable (4).

2. Dispositif d'affichage selon la revendication 1, dans lequel l'unité de base (6) est conçue pour accueillir et ranger l'écran de projection gonflable (4) lorsque l'écran de projection gonflable (4) est dégonflé et où l'ouverture de l'écran de projection gonflable (4) reste raccordée à l'ouverture de l'unité de base (6).

3. Dispositif d'affichage selon la revendication 2 , dans lequel l'unité de base (6) est conçue pour ranger l'écran de projection gonflable (4) dans l'unité de base (6) sans avoir à détacher l'ouverture de l'écran de projection gonflable (4) de l'ouverture de l'unité de base (6), en faisant passer l'écran de projection gonflable (4) par l'ouverture de l'unité de base (6) pour le faire rentrer à l'intérieur de l'unité de base (6).

4. Dispositif d'affichage selon la revendication 2, dans lequel l'unité de base (6) comprend un renfoncement et où l'ouverture de l'unité de base (6) se trouve dans le renfoncement et est plus étroit que ledit renfoncement au moins dans une dimension, et où l'écran de projection gonflable (4) vient se loger autour de l'ouverture de l'unité de base par introduction de l'écran de projection gonflable (4) dans le renfoncement autour de l'ouverture de l'unité de base (6).

5. Dispositif d'affichage selon l'une des revendications précédentes, dans lequel l'écran de projection gonflable (4) se compose de deux couches (92, 94).

6. Dispositif d'affichage selon l'une des revendications précédentes, dans lequel le dispositif de projection d'images (1, 2) comprend une partie projetant l'image (1) avec une première position déployée, en cours d'utilisation, pour la projection d'images, et une seconde position rétractée pour le rangement de l'écran de projection gonflable (4).

7. Dispositif d'affichage selon la revendication 6, dans lequel l'unité de base (6) comprend un volume de rangement de l'écran de projection délimité en partie par un diaphragme (48, 64, 112) comprenant une ouverture à travers laquelle la partie projetant l'image de l'appareil de projection d'image (1) passe une fois déployée, mais pas en position rétractée.

8. Dispositif d'affichage selon la revendication 7, dans lequel la partie projetant l'image (1) est mobile par rapport à l'unité de base (6) permettant à la partie projetant l'image (1) de passer par l'ouverture du diaphragme (48, 64, 112) une fois déployée, mais pas en position rétractée.

9. Dispositif d'affichage selon la revendication 7 ou la revendication 8, dans lequel le diaphragme (48, 64, 112) est mobile en passant d'une première position où la partie projetant l'image (1) passe par l'ouverture du diaphragme (48, 64, 112) à une seconde position où la partie projetant l'image (1) ne passe pas par l'ouverture.

10. Dispositif d'affichage selon l'une des revendications 7 à 9, dans lequel un raccord hermétique au gaz (68) se trouve entre la partie projetant l'image (1), ou une partie reliée à la partie projetant l'image (1) et qui supporte la partie projetant l'image (1) et se meut avec elle, et l'ouverture du diaphragme (64).

11. Dispositif d'affichage selon l'une des revendications précédentes, dans lequel l'ouverture de l'écran de projection gonflable et l'ouverture de l'unité de base (6) font moins de la moitié de la largeur de l'unité de base (6) sur au moins une dimension, et l'unité de base (6) et l'écran de projection gonflable (4) sont conçus de telle façon que l'écran de projection gonflable (4), lorsqu'il est gonflé, repose sur une formation de l'unité de base (6) éloignée de l'ouverture de l'écran de projection gonflable (4).

12. Dispositif d'affichage selon l'une des revendications précédentes, dans lequel l'unité de base (6) est généralement cylindrique de telle sorte que le dispositif d'affichage peut être enroulé lorsque l'écran de projection gonflable (4) est rangé dans l'unité de base (6).

13. Dispositif d'affichage selon l'une des revendications précédentes, dans lequel l'écran de projection gonflable (4) et le dispositif de projection d'images (1, 2), ainsi que les composants mécaniques, électriques et informatiques requis pour le fonctionnement du dispositif d'affichage ainsi que pour le rangement et le transport, sont tous rangés dans l'unité de base (6) lorsque l'écran de projection (4) n'est pas gonflé.
